# EUROPÄISCHE PATENTSCHRIFT

(11) **EP 3 966 023 B1**
(45) Veröffentlichungstag und Bekanntmachung des Hinweises auf die Patenterteilung: **03.01.2024**
(21) Anmeldenummer: 20710922.4
(22) Anmeldetag: 12.03.2020
(51) Int. Cl.: B29D 30/32, B29D 30/24

(54) **REIFENAUFBAUTROMMEL**
TYRE BUILDING DRUM
TAMBOUR DE CONFECTION DE PNEU

(30) Priorität: 09.05.2019 DE 102019206699
(43) Veröffentlichungstag der Anmeldung: 16.03.2022
(73) Patentinhaber: Continental Reifen Deutschland GmbH, 30165 Hannover (DE)
(72) Erfinder: MEIER, Marvin, 30419 Hannover (DE); GÜMMER, Oliver, 30419 Hannover (DE); HARTMANN, Uwe, 30419 Hannover (DE); SCHISCHKE, Henrik, 30419 Hannover (DE); DIETRICH, Wolfgang, 30419 Hannover (DE)
(74) Vertreter: Continental Corporation
(86) Internationale Anmeldenummer: PCT/EP2020/056596
(87) Internationale Veröffentlichungsnummer: WO 2020/224831

(56) Entgegenhaltungen:
- EP-A1- 2 464 508
- EP-A1- 2 508 331
- EP-A2- 1 439 054
- KR-B1- 101 566 399

## Beschreibung

Die Erfindung betrifft eine Reifenaufbautrommel zum Herstellen eines Reifenrohlings, wobei die Reifenaufbautrommel ein drehbares Trommelgehäuse und zwei koaxial nebeneinander und relativ zueinander verfahrbare Bombierköpfe auf dem Trommelgehäuse aufweist, die im Wesentlichen symmetrisch zur Mittelsenkrechten durch das Trommelgehäuse angeordnet sind und die Bombierköpfe mit kranzförmig über den Umfang der Bombierköpfe angeordneten schwenkbaren Fingern ausgerüstet sind, wobei die Finger mittels eines Spindelantriebs schwenkbar sind und wobei eine Zugstange und eine Druckstange vorgesehen sind, die sich koaxial zueinander erstrecken und axial aus dem Trommelgehäuse herausgeführt und axial gegenläufig verschiebbar sind und die Druckstange mit dem einen Bombierkopf und die Zugstange mit dem anderen Bombierkopf verbunden ist.

Bei der herkömmlichen Herstellung von Neureifen erfolgt ein Herstellungsschritt des Reifenrohlings auf einer Reifenaufbautrommel, bei der die zunächst flach aufliegende Reifenkarkasse durch einen Expansionsvorgang bombiert wird. Der eigentliche Bombiervorgang der Karkasse erfolgt beispielsweise über einen Mittenbalg, der den mittleren Bereich der Karkasse expandiert. Anschließend werden bei diesem Vorgang die beiden äußeren Seitenwände an der bombierten Karkasse hochgeschlagen und dabei um die Wulstkerne gefaltet. Dieser Vorgang des Hochschlagens der Seitenwände erfolgt entweder mit sogenannten Seitenbombierbälgen oder mit einem kranzförmig über den Umfang angeordneten System verschwenkbarer Finger. Beim Einsatz von Seitenbombierbälgen werden zwei im Bereich der Seitenwandlagen angeordnete Blähbälge aufgeblasen, die auf diese Weise die Seitenwände an die bombierte Karkasse pressen. Der Hochschlagvorgang mit Hilfe von Seitenbombierbälgen kann jedoch den Nachteil aufweisen, dass diese Bälge nicht bis in die Schulterbereiche des Reifenrohlings wirken, wodurch manuelle Nacharbeit erforderlich wird. Darüber hinaus sind die Seitenbombierbälge einem hohen Verschleiß unterworfen, wodurch ein entsprechend häufiger Austausch erforderlich ist, der mit sehr viel Zeitaufwand verbunden ist.

Das Hochschlagen der Seitenwände mithilfe kranzförmig über den Umfang der Bombierköpfe angeordneter verschwenkbarer Finger ist beispielsweise in der DE 199 34 791 C1 offenbart. Bei dieser Vorrichtung erfolgt das Verschwenken der Finger zum Auseinanderspreizen über einen pneumatischen Antrieb, der aus zwei separaten Pneumatikzylindern besteht. Die beiden Pneumatikzylinder werden separat mit Druckluft beaufschlagt, wodurch die Finger auseinandergespreizt und dadurch die Seitenwände an der Karkasse hochgeschlagen werden.

Ein wesentlicher Nachteil bei diesem Prinzip besteht darin, dass zum Beispiel aufgrund von unterschiedlichen Reibungseinflüssen das Auseinanderspreizen der gegenüberliegenden Systeme kranzförmig angeordneter verschwenkbarer Finger an beiden Bombierköpfen nicht immer gleichzeitig oder ruckartig erfolgt. Ein zeitversetztes Auseinanderspreizen der Finger hat zur Folge, dass die Seitenwände nicht gleichmäßig gegen die bombierte Karkasse gedrückt werden und es dadurch zu einer fehlerhaften Verbindung zwischen beiden Materiallagen kommen kann, die die Produktion von Ausschussware zur Folge hat.

Die EP 1 439 054 B1 beschreibt die Verstellung der Bombierköpfe sowie das Verschwenken der Finger mittels zweier koaxial zueinander angeordneter Spindelantriebe. Ein ähnliches Prinzip ist Gegenstand der EP 2 217 433 B1, bei der jedoch die Spindeltriebe in radialer Richtung voneinander beabstandet und nicht koaxial angeordnet sind. Bei derartigen Ausgestaltungen ist es erforderlich, für den zur Verstellung der Bombierköpfe verwendeten Spindelantrieb Spezialteile vorzusehen, die hohe Kosten und Lieferzeiten verursachen, insbesondere da durch die hohen aufzubringenden Kräfte und den geringen zur Verfügung stehenden Bauraum hohe konstruktive Anforderungen bestehen.

Die EP 2 464 508 B1 offenbart eine Reifenaufbautrommel, bei der die schwenkbaren Finger sowie die relativ zueinander verfahrbaren Bombierköpfe über ein System von Zug-/Druckstangen betätigt werden, wobei jede Zug-/Druckstange über ein zugeordnetes Joch von einem zugeordneten Spindelantrieb verstellt wird. Da insoweit für das Verschieben von zwei Bombierköpfen und entsprechend zwei darauf angeordneter Systeme verschwenkbarer Finger insgesamt vier Verstelleinrichtungen erforderlich sind, muss eine entsprechende Anzahl an Zug-/Druckstangen in koaxialer Anordnung mit entsprechenden Jochen vorgesehen werden, was baulich sehr aufwendig ist.

Eine gattungsgemäße Reifenaufbautrommel ist aus der KR 101 566 399 B1 bekannt.

Aufgabe der Erfindung ist es, eine Reifenaufbautrommel der eingangs genannten Art vorzuschlagen, die über einen besonders einfachen Aufbau bei zuverlässiger Funktion verfügt.

Zur Lösung der gestellten Aufgabe schlägt die Erfindung die Ausgestaltung einer Reifenaufbautrommel gemäß den Merkmalen des Patentanspruches 1 vor.

Vorteilhafte Ausgestaltungen und Weiterbildungen der Erfindung sind Gegenstand der abhängigen Ansprüche.

Die erfindungsgemäße Lösung sieht vor, dass als Spindelantrieb für das Schwenken der Finger die Zugstange und die Druckstange jeweils als Spindel ausgebildet sind und jeweils Spindelmuttern für den Schwenkantrieb der Finger tragen und mit einem Drehantrieb ausgerüstet sind.

Während insoweit die beiden Bombierköpfe mittels koaxial zueinander verlaufender und axial gegenläufig verschiebbarer Zug-/Druckstangen auf dem Trommelgehäuse verfahrbar sind, wird das Schwenken der Finger zum Hochschlagen der Seitenwände mittels eines Spindelantriebs bewirkt. Ein großer Vorteil dieser Ausgestaltung liegt darin, dass die wesentlichen Antriebselemente aus dem Innern des Trommelgehäuses nach außen verlagert werden können, wo ein wesentlich vergrößerter Bauraum zur Verfügung steht. Dies ermöglicht den Einsatz von Standard-Maschinenelementen, die eine kurze Lieferzeit und einen vergleichsweise günstigen Preis aufweisen. Durch die koaxiale bzw. konzentrische Anordnung von Zugstab und Druckstab werden die erforderlichen aufzubringenden Zug- und Druckkräfte von den Antriebselementen besonders effektiv eingeleitet, sodass die verwendeten Führungen nur geringe Flächenbelastungen aufnehmen müssen und dadurch besonders verschleißarm arbeiten. Darüber hinaus sind wartungsanfällige Komponenten von außen wesentlich einfacher zugänglich.

In der erfindungsgemäßen und mit einer weiter verringerten Anzahl an Teilen auskommenden Ausgestaltung der erfindungsgemäßen Reifenaufbautrommel dienen somit die zur Verstellung der Bombierköpfe verwendeten Zug-/Druckstangen zugleich auch als Spindelantrieb für die Schwenkbewegung der Finger. Zur Verstellung der Bombierköpfe werden die Spindeln axial verschoben und das Verschwenken der Finger wird durch eine Drehung der Spindeln erreicht.

Nach einem Vorschlag der Erfindung ist zur Synchronisierung der Drehbewegung des Trommelgehäuses bei Betrieb der Reifenaufbautrommel mit der Drehung des Spindelantriebes der Finger ein Differentialgetriebe vorgesehen.

Nach einem weiteren Vorschlag der Erfindung weisen die Zug- und Druckstange jeweils an ihrem aus dem Trommelgehäuse herausgeführten Ende ein Joch mit mindestens einer zugeordneten drehbaren Spindel, beispielsweise zwei Spindeln als Verschiebeantrieb auf.

Dabei kann gemäß einem Vorschlag der Erfindung vorgesehen sein, dass die Spindeln auf einer gemeinsamen Welle mit gegenläufiger Gewindesteigung und mit einem gemeinsamen Drehantrieb ausgebildet sind, sodass die hervorgerufene Verfahrbewegung der beiden Bombierköpfe auf dem Trommelgehäuse exakt synchronisiert abläuft.

Als Antriebsmotoren für die drehbaren Spindeln zum axialen Verschieben der Zug-und Druckstange und des Spindelantriebes kommen vorzugsweise Servomotoren zum Einsatz.

Zur Erzeugung der Axialbewegung können wiederum die als Spindel ausgeführte Zug-und Druckstange jeweils an ihrem aus dem Trommelgehäuse herausgeführten Ende ein Joch aufweisen, welches mit mindestens einer zugeordneten drehbaren Spindel als Verschiebeantrieb gekoppelt ist, wobei weiter bevorzugt diese Spindeln auf einer gemeinsamen Welle mit gegenläufiger Gewindesteigung und einem gemeinsamen Drehantrieb ausgebildet sind, um die vorangehend bereits erläuterten Vorteile einer baulichen Vereinfachung sowie der synchronen Bewegung beider Bombierköpfe zu erreichen.

Grundsätzlich ist es möglich, die als Spindel ausgeführte Zugstange und die Druckstange jeweils mit einem separaten Drehantrieb zu versehen, um durch Rotation die Schwenkbewegung der Finger auszuführen. Nach einem Vorschlag der Erfindung ist jedoch eine schaltbare drehmomentübertragende Kupplung zwischen Zugstange und Druckstange vorgesehen, die bei Aktivierung die Zug-und Druckstange miteinander koppelt, sodass über einen gemeinsamen Drehantrieb eine gemeinsame und synchrone Bewegung der Finger beider Bombierköpfe bewirkt werden kann. Alternativ kann auch ein zentraler Antrieb z.B. mittels Riemen vorgesehen sein, der die Drehung der als Spindel ausgeführten Zug- und Druckstange gemeinsam bewirkt. So kann ein zentraler Antriebsmotor über einen ersten Riementrieb eine mit den beweglichen Jochen verbundene Keilwelle antreiben, von der aus zwei weitere Riementriebe die Bewegung auf die als Spindel ausgeführte Zug- und Druckstange übertragen.

Weitere Ausgestaltungen und Einzelheiten der Erfindung werden nachfolgend anhand von Ausführungsbeispielen in der Zeichnung näher erläutert. Es zeigen:
- Figur 1: einen Teilschnitt durch eine Reifenaufbautrommel, mittels derer ein Hochschlagen der Reifenseitenwände bewirkt wird;
- Figur 2: in einer schematisierten Darstellung das Antriebskonzept der Reifenaufbautrommel gemäß Figur 1 nach dem Stand der Technik;
- Figur 3: in einer schematisierten Darstellung das Antriebskonzept der Reifenaufbautrommel gemäß Figur 1 in einer Ausführungsform der Erfindung.

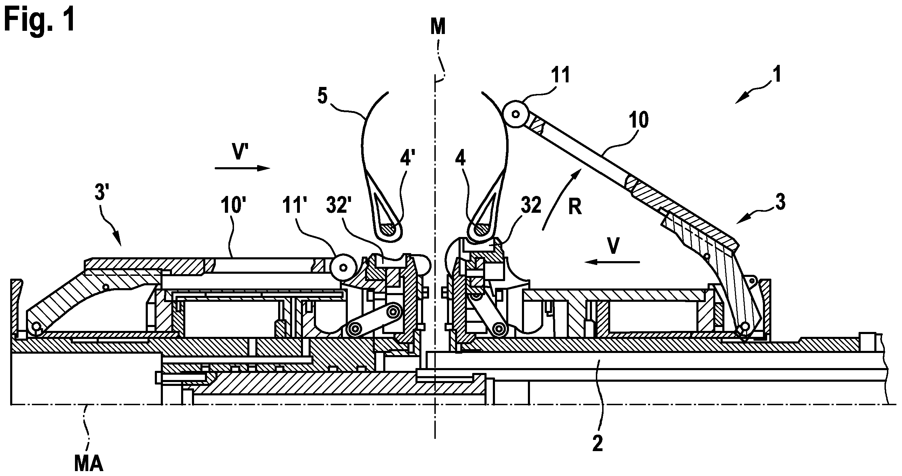

Die Figur 1 zeigt die obere Hälfte eines mittleren Abschnittes einer Reifenaufbautrommel 1 im Schnitt. Die Reifenaufbautrommel 1 weist ein in nicht näher dargestellter Weise um eine Mittelachse MA rotierend angetriebenes zylindrisches Trommelgehäuse 2 und zwei im Wesentlichen symmetrisch zu einer Mittelsenkrechten M durch das Trommelgehäuse 2 angeordnete hohlzylindrische Bombierköpfe 3, 3' auf, die auf den Umfang des Trommelgehäuses 2 koaxial nebeneinander aufgeschoben und in und entgegen der durch Pfeile V, V' dargestellten Verschieberichtung relativ zueinander entlang der Mittelachse MA verfahrbar sind.

Die Bombierköpfe 3, 3' umfassen an ihren einander zugewandten Endbereichen mit Bezugszeichen 32, 32' versehene Spanneinrichtungen zum Spannen der auf einer Karkasse 5 aufgesetzten Wulstkerne 4, 4'. In der in der Figur 1 dargestellten Arbeitsstellung sind die Bombierköpfe 3, 3' bereits zur Bombierung der zwischen den Wulstkernen 4, 4' liegenden Karkassbereiche soweit gemäß Pfeilen V, V' aufeinander zugefahren, dass die in der Figur 1 skizzierte Reifenform erreicht ist.

Nach dem Bombieren des zwischen den Wulstkernen 4, 4' liegenden Bereiches der Karkasse 5 liegen die verbleibenden äußeren Seitenteile der Karkasse 5 noch auf symmetrisch zur Mittelachse MA sowie kranzförmig über den Umfang Bombierköpfe 3, 3' angeordneten schwenkbaren Fingern 10, 10' auf, die an ihrem freien Ende mit Rollen 11, 11 ' versehen sind.

In der Figur 1 ist linksseitig die Ruheposition der Finger 10' auf dem Bombierkopf 3' dargestellt, in der die Finger im Wesentlichen koaxial zum Bombierkopf 3, 3' an diesem anliegen, sodass der Kranz von Fingern 10, 10' in dieser Orientierung den Außenumfang der Bombierköpfe 3, 3' definiert.

Zum Hochschlagen der Reifenseitenwände werden die Finger 10, 10' gemäß Pfeil R in die in der Figur 1 rechtsseitig dargestellte Position verschwenkt, wobei die Finger 10, 10' mit ihren Rollen 11, 11' an der bombierten Karkasse 5 hochlaufen und dabei in gegenüber der Reifenaufbautrommel radialen Ebenen gespreizt werden. Hierdurch erfolgt das gewünschte Hochschlagen und Anheften der zuvor auf den Fingern 10, 10' abgelegten, außerhalb der Wulstkerne 4, 4' befindlichen äußeren Seitenteile der Karkasse 5 unter Einschluss der Wulstkerne 4, 4' und Ausbildung der späteren äußeren Seitenwände des Reifens.

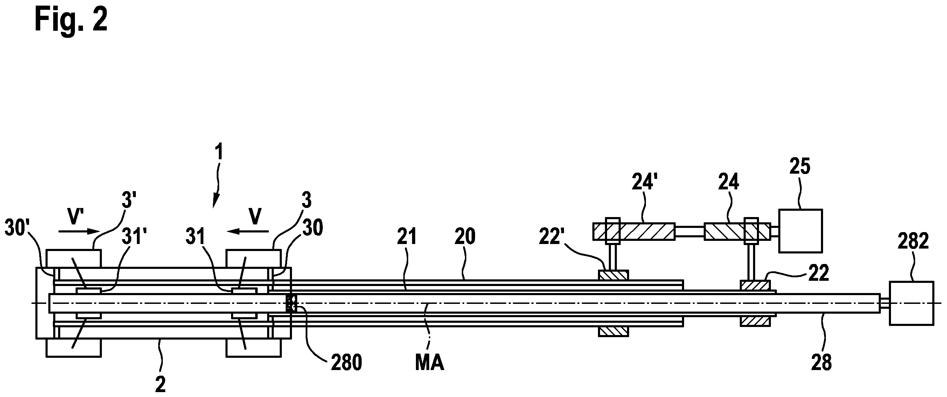

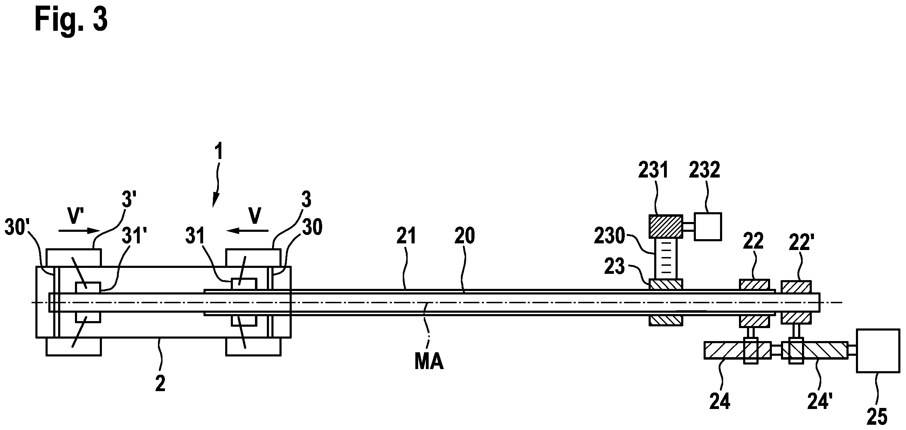

Für die auf der Reifenaufbautrommel bewirkten Herstellungsschritte werden von daher axial gegenläufige Verschiebebewegungen V, V' der beiden Bombierköpfe 3, 3' sowie Verschwenkbewegungen R der Finger 10, 10' ausgeführt, die über entsprechende und nachfolgend anhand der Figuren 2 und 3 in zwei alternativen Ausgestaltungen erläuterte Antriebskonzepte realisiert werden.

In einer in der Figur 2 dargestellten Ausgestaltung erkennt man schematisch die Reifenaufbautrommel 1 mit um die Mittelachse MA drehbarem Trommelgehäuse 2, auf dem die Bombierköpfe 3, 3' in axialer Richtung gemäß Pfeilen V, V' wie vorangehend geschildert verfahrbar sind. Zum Zwecke der besseren Übersichtlichkeit wurde jedoch in den Figuren 2 und 3 auf die Darstellung der über den Umfang der Bombierköpfe 3,3' angeordneten schwenkbaren Finger 10, 10' verzichtet.

Für die Ausführung der axialen Verschiebung der Bombierköpfe 3, 3' entlang der Mittelachse MA gemäß Pfeilen V, V' sind konzentrisch zueinander und in Bezug auf die Mittelachse MA eine Druckstange 21 und eine Zugstange 20 vorgesehen, die rechtsseitig aus dem Trommelgehäuse 2 herausgeführt sind und teleskopierend ineinander geführt sind.

Die Zugstange 20 weist dabei den größten Innendurchmesser auf und ist an ihrem innerhalb des Trommelgehäuses 2 zum Liegen kommenden Ende über eine Anbindung 30' mit dem linksseitigen Bombierkopf 3' gekoppelt. An ihrem aus dem Trommelgehäuse 2 herausgeführten Ende ist die Zugstange 20 über ein Joch 22' mit einer Spindel 24' gekoppelt.

Teleskopierend innerhalb der Zugstange 20 verläuft die Druckstange 21 mit demgemäß gegenüber der Zugstange 20 kleinerem Durchmesser. Die Druckstange 21 ist an ihrem innerhalb des Trommelgehäuses 2 zum Liegen kommenden Ende über eine Anbindung 30 mit dem rechtsseitigen Bombierkopf 3 gekoppelt. An ihrem aus dem Trommelgehäuse 2 herausgeführten und auch das entsprechende Ende der Zugstange 20 überragenden Ende ist die Druckstange 21 über ein Joch 22 mit einer Spindel 24 gekoppelt.

Die beiden mit der Druckstange 21 und der Zugstange 20 gekoppelten Spindeln 24, 24' sind auf einer gemeinsamen Welle als Gewindeabschnitte mit gegenläufiger Gewindesteigung ausgebildet und werden von einem gemeinsamen Drehantrieb 25, beispielsweise einem Servomotor drehangetrieben.

Infolge der entsprechenden Ausrichtung der mit gegenläufiger Gewindesteigung ausgebildeten Spindeln 24, 24' wird somit bei Aktivierung des Drehantriebes 25 das mit der Druckstange 21 gekoppelte Joch 22 auf der Spindel 24 nach links verlagert, sodass die Druckstange 21 über die Anbindung 30 eine axiale Druckkraft auf den Bombierkopf 3 ausübt und diesen in Pfeilrichtung V auf dem Trommelgehäuse 2 nach links verlagert. Entsprechend wird das mit der Zugstange 20 gekoppelte Joch 22' auf der Spindel 24' nach rechts verlagert, sodass die Zugstange 20 über die Anbindung 30' eine axiale Zugkraft auf den Bombierkopf 3' ausübt und diesen im Pfeilrichtung V' auf dem Trommelgehäuse 2 synchron nach rechts verlagert.

Insoweit kann durch Betätigung des gemeinsamen Drehantriebs 25 ein synchrones gegenläufiges Verfahren der beiden Bombierköpfe 3, 3' auf dem Trommelgehäuse 2 zum Bombieren der nicht dargestellte Karkasse 5 bewirkt werden.

Um sodann die in der Darstellung gemäß Figur 2 nicht dargestellte, jedoch in ihrer Funktionsweise bereits anhand der Figur 1 erläuterten Finger 10, 10' in Pfeilrichtung R zu verschwenken und die Seitenbereiche der Karkasse 5 hochzuschlagen, ist innerhalb der Druckstange 21 und insoweit konzentrisch zu dieser sowie der Zugstange 20 und der Mittelachse MA eine Zentralspindel 28 als Spindelantrieb für das Schwenken der Finger 10, 10' vorgesehen. Innerhalb des Trommelgehäuses 2 trägt die Zentralspindel 28 Spindelmuttern 31, 31', die in nicht näher dargestellter, aber dem Fachmann geläufiger Weise die Drehung der Zentralspindel 28 in eine Schwenkbewegung der Finger 10, 10' umsetzen. Dazu ist die Spindelmutter 31 in geeigneter Weise mit dem Bombierkopf 3 und die Spindelmutter 31' in geeigneter Weise mit dem Bombierkopf 3' mechanisch verbunden.

An ihrem anderen Ende ist die Zentralspindel 28 aus dem Trommelgehäuse 2 herausgeführt und überragt mit ihrem herausgeführten Ende die Druckstange 21, kann sich jedoch innerhalb dieser ungehindert drehen. Am herausgeführten Ende der Zentralspindel 28 ist ein Antriebsmotor 282, beispielsweise ein Servomotor für den Drehantrieb derselben vorgesehen.

Aufgrund dieser Ausgestaltung erfolgt somit das Verstellen der Bombierköpfe 3, 3' über die gegenläufige axiale Verschiebung der Zug- und Druckstangen 20, 21 und das Verschwenken der Finger 10, 10' über eine Drehung der Zentralspindel 28.

Um die beschriebene konzentrische Anordnung von Zugstange 20, Druckstange 21 und Zentralspindel 28 vornehmen zu können, sind die Zugstange 20 und die Druckstange 21 als konzentrische Rohre ausgeführt.

Um eventuell auftretende Biegemomente nicht innerhalb der Zentralspindel 28 weiterzuleiten, ist überdies im Bereich des Austrittes derselben aus dem Trommelgehäuse 2 eine Kupplung 280 vorgesehen, die insoweit die Zentralspindel 28 auftrennt, jedoch das Drehmoment vom Antriebsmotor 282 überträgt.

Das vorangehend erläuterte Antriebskonzept gestattet von daher die gewünschten Verstell- bzw. Verfahrbewegungen der Bombierköpfe 3,3' sowie der darauf angeordneten Finger 10 10' unter Verwendung lediglich einer Zugstange 20, einer Druckstange 21 und einer Zentralspindel 28 sowie eines gemeinsamen Drehantriebes 25 für Zug- und Druckstange 20, 21 und eines weiteren Drehantriebes 282 für die Zentralspindel 28.

In der Figur 3 ist eine erfindungsgemäße Ausgestaltung des Antriebskonzepts dargestellt, bei der im Vergleich zu der Ausgestaltung gemäß Figur 2 eine weitere Reduktion der benötigten Teile erfolgen kann, wobei gleiche Teile gleiche Bezugszeichen erhalten haben und nachfolgend zur Vermeidung von Wiederholungen nicht nochmals gesondert erläutert werden, sofern dies nicht zum Verständnis der Erfindung erforderlich ist.

Auch bei dem Antriebskonzept gemäß Figur 3 werden die beiden Bombierköpfe 3, 3' über eine konzentrische Anordnung einer Zugstange 20 und einer Druckstange 21 in Bezug zur Mittelachse MA axial auf dem Trommelgehäuse 2 verfahren, wobei jedoch im Gegensatz zum Ausführungsbeispiel gemäß Figur 2 im Ausführungsbeispiel gemäß Figur 3 die Zugstange 20 innerhalb der Druckstange 21 verläuft, sodass die Zugstange 20 einen geringeren Durchmesser als die Druckstange 21 aufweist.

Die gewünschte und auf die Bombierköpfe 3, 3' mittels der Anbindungen 30, 30' übertragene synchrone und axial gegenläufige Verlagerung von Zugstange 20 und Druckstange 21 erfolgt wiederum über einen gemeinsamen Drehantrieb 25 und zwei auf einer gemeinsamen Welle angeordnete gegenläufige Spindelabschnitte 24, 24' sowie entsprechende mit der Zugstange 20 bzw. der Druckstange 21 verbundene und mit den Spindelabschnitten 24 bzw. 24' gekoppelte Joche 22, 22'.

Die Schwenkbewegung der Finger 10, 10' wird über einen Spindelantrieb bewirkt, der in die Zugstange 20 und die Druckstange 21 integriert ist. Dazu sind sowohl die Zugstange 20 als auch die Druckstange 21 als Spindel ausgeführt, d. h. sie bilden eine Zugspindel 20 bzw. eine Druckspindel 21. Entsprechend trägt die über die Anbindung 30 mit dem Bombierkopf 3 gekoppelte Druckspindel 21 eine Spindelmutter 31, die in geeigneter Weise eine Drehung der Druckspindel 21 in die Bewegung der Finger 10 auf dem Bombierkopf 3 gemäß Pfeil R in Figur 1 überführt. Korrespondierend trägt die Zugspindel 20, die über die Anbindung 30' mit dem Bombierkopf 3' verbunden ist, eine Spindelmutter 31', die analog eine Drehung der Zugspindel 20 in die Bewegung der Finger 10' auf dem Bombierkopf 3' überführt.

Zur Verstellung bzw. Bewegung der Finger 10, 10' auf den Bombierköpfen 3, 3' werden die Zugspindel 20 und die Druckspindel 21 mittels einer schaltbaren drehmomentübertragende Kupplung 23 mechanisch gekoppelt und über einen gemeinsamen Drehantrieb, beispielsweise in Form eines Riementriebes 230 von einem Antriebsmotor 232 an einer Umlenkrolle 231 des Riementriebs 230 in Rotation um die Mittelachse MA versetzt. Diese Rotation ruft eine entsprechende Verlagerung der Spindelmuttern 31, 31' hervor, die über eine geeignete Mechanik (nicht im Detail dargestellt) zum Verschwenken der Finger 10, 10' in Pfeilrichtung R umgesetzt werden kann.

Bei dem Antriebskonzept gemäß der Figur 3 sind von daher für die Übertragung sämtlicher Antriebskräfte auf die Bombierköpfe 3, 3' und deren Finger 10, 10' nur noch eine jeweils als Spindel ausgeführte Zugstange 20 und Druckstange 21 sowie zwei Antriebsmotoren 25, 232 erforderlich.

Ein wesentlicher Vorteil der vorangehend beschriebenen Ausgestaltung liegt darin, dass die Verstellungen der Bombierköpfe und der Finger von unabhängigen Antriebssträngen angetrieben werden, die sich nicht gegenseitig beeinflussen. Die Vorgabe von Verfahrprofilen für die einzelnen Bewegungen und die gezielte Beeinflussung bzw. Aufzeichnung der Prozesskräfte wird damit deutlich vereinfacht und fehlerunanfälliger.

Es versteht sich, dass nach Abschluss der Reifenherstellung die vollzogenen Verfahrbar- und Verschwenkbewegungen in entgegengesetzter Richtung wieder zurückgeführt werden, ohne dass dies einer besonderen Erläuterung bedarf.

Die erfindungsgemäße Reifenaufbautrommel eignet sich sowohl zur Integration in Pkw-Reifenaufbaumaschinen als auch in sonstiger Reifenaufbaumaschinen.

### Bezugszeichenliste:

- 1:: Reifenaufbautrommel
- 2:: Trommelgehäuse
- 3, 3':: Bombierkopf
- 4, 4':: Wulstkern
- 5:: Karkasse
- 10, 10':: Finger
- 11, 11':: Rolle
- 20:: Zugstange
- 21:: Druckstange
- 22, 22':: Joch
- 23:: Kupplung
- 24, 24':: Spindel
- 25:: Drehantrieb
- 28:: Zentralspindel
- 30, 30':: Anbindung
- 31, 31 ':: Spindelmutter
- 230:: Riementrieb
- 231:: Umlenkrolle
- 232:: Antriebsmotor
- 280:: Kupplung
- 282:: Antriebsmotor

- M:: Mittelsenkrechte
- MA:: Mittelachse
- R:: Schwenkrichtung
- V, V':: Verfahrrichtung

## Patentansprüche

1. Reifenaufbautrommel zum Herstellen eines Reifenrohlings, wobei die Reifenaufbautrommel ein drehbares Trommelgehäuse (2) und zwei koaxial nebeneinander und relativ zueinander verfahrbare Bombierköpfe (3, 3') auf dem Trommelgehäuse (2) aufweist, die im Wesentlichen symmetrisch zur Mittelsenkrechten (M) durch das Trommelgehäuse (2) angeordnet sind und die Bombierköpfe (3, 3') mit kranzförmig über den Umfang der Bombierköpfe (3, 3') angeordneten schwenkbaren Fingern (10) ausgerüstet sind, wobei die Finger (10) mittels eines Spindelantriebs schwenkbar sind und wobei eine Zugstange (20) und eine Druckstange (21) vorgesehen sind, die sich koaxial zueinander erstrecken und axial aus dem Trommelgehäuse (2) herausgeführt und axial gegenläufig verschiebbar sind und die Druckstange (21) mit dem einen Bombierkopf (3) und die Zugstange (20) mit dem anderen Bombierkopf (3') verbunden ist, **dadurch gekennzeichnet, dass** als Spindelantrieb für das Schwenken der Finger (10) die Zugstange (20) und die Druckstange (21) jeweils als Spindel ausgebildet sind und jeweils Spindelmuttern (31, 31') für den Schwenkantrieb der Finger (10) tragen und mit einem Drehantrieb ausgerüstet sind.

2. Reifenaufbautrommel nach Anspruch 1, **dadurch gekennzeichnet, dass** zur Synchronisierung der Drehbewegung des Trommelgehäuses (2) mit der Drehung des Spindelantriebes der Finger (10) ein Differentialgetriebe vorgesehen ist.

3. Reifenaufbautrommel nach Anspruch 1 oder 2, **dadurch gekennzeichnet, dass** die Zug- und Druckstange (20, 21) jeweils an ihrem aus dem Trommelgehäuse (2) herausgeführten Ende ein Joch (22, 22') mit mindestens einer zugeordneten drehbaren Spindel (24, 24') als Verschiebeantrieb aufweisen.

4. Reifenaufbautrommel nach Anspruch 3, **dadurch gekennzeichnet, dass** die Spindeln (24, 24') auf einer gemeinsamen Welle mit gegenläufiger Gewindesteigung und mit einem gemeinsamen Drehantrieb (25) ausgebildet sind.

5. Reifenaufbautrommel nach einem der Ansprüche 1 bis 4, **dadurch gekennzeichnet, dass** die als Spindel ausgebildete Zug- und Druckstange (20, 21) über eine schaltbare drehmomentübertragende Kupplung (23) oder einen Riementrieb miteinander koppelbar sind und einen gemeinsamen Drehantrieb (232) aufweisen.

## Claims

1. Tyre-building drum for producing a green tyre, wherein the tyre-building drum has a rotatable drum housing (2) and two shaping heads (3, 3'), movable coaxially adjacent to one another and relative to one another, on the drum housing (2), which shaping heads are arranged substantially symmetrically in relation to the central perpendicular (M) through the drum housing (2), and the shaping heads (3, 3') are equipped with pivotable fingers (10) which are arranged in the form of a ring over the circumference of the shaping heads (3, 3'), wherein the fingers (10) are pivotable by means of a spindle drive, and wherein provision is made of a pull rod (20) and a push rod (21) which extend coaxially in relation to one another and which are led axially out of the drum housing (2) and which are displaceable axially in opposite directions, and the push rod (21) is connected to one shaping head (3) and the pull rod (20) is connected to the other shaping head (3'), **characterized in that**, as spindle drive for the pivoting of the fingers (10), the pull rod (20) and the push rod (21) are each in the form of a spindle and each carry spindle nuts (31, 31') for the pivoting drive of the fingers (10) and are equipped with a rotary drive.

2. Tyre-building drum according to Claim 1, **characterized in that**, for synchronization of the rotational movement of the drum housing (2) with the rotation of the spindle drive of the fingers (10), provision is made of a differential transmission.

3. Tyre-building drum according to Claim 1 or 2, **characterized in that** the pull and push rods (20, 21) have, in each case at their end which is led out of the drum housing (2), a yoke (22, 22') with at least one assigned rotatable spindle (24, 24') as displacement drive.

4. Tyre-building drum according to Claim 3, **characterized in that** the spindles (24, 24') are configured to be on a common shaft with opposing thread pitch and to have a common rotary drive (25).

5. Tyre-building drum according to one of Claims 1 to 4, **characterized in that** the pull and push rods (20, 21) in the form of spindles are couplable to one another via a switchable torque-transmitting coupling (23) or a belt drive and have a common rotary drive (232).

## Revendications

1. Tambour de construction de pneumatique destiné à produire une ébauche de pneumatique, le tambour de construction de pneumatique comportant un boîtier de tambour rotatif (2) et, sur le boîtier de tambour (2), deux têtes de galbage (3, 3') qui sont déplaçables coaxialement l'une à côté de l'autre et relativement l'une à l'autre et qui sont disposées sensiblement symétriquement par rapport à la verticale médiane (M) passant à travers le boîtier de tambour (2) et les têtes de galbage (3, 3') étant équipées de doigts pivotants (10) disposés en forme de couronne sur la périphérie des têtes de galbage (3, 3'), les doigts (10) pouvant pivoter au moyen d'un entraînement à broche et une tige de traction (20) et une tige de poussée (21) étant prévues qui s'étendent coaxialement l'une à l'autre et qui font saillie axialement du boîtier de tambour (2) et qui sont déplaçables axialement dans des directions opposées et la tige de poussée (21) étant reliée à l'une des têtes de galbage (3) et la tige de traction (20) étant reliée à l'autre tête de galbage (3'), **caractérisé en ce que**, en tant qu'entraînement à broche destiné à faire pivoter les doigts (10), la tige de traction (20) et la tige de poussée (21) sont conçues chacune comme une broche et portent chacune des écrous de broche (31, 31') destinés à l'entraînement par pivotement des doigts (10) et sont équipées d'un entraînement en rotation.

2. Tambour de construction de pneumatique selon la revendication 1, **caractérisé en ce qu'**une transmission différentielle est prévue pour synchroniser le mouvement de rotation du boîtier de tambour (2) avec la rotation de l'entraînement à broche des doigts (10).

3. Tambour de construction de pneumatique selon la revendication 1 ou 2, **caractérisé en ce que** la tige de traction et la tige de poussée (20, 21) comportent chacune comme entraînement en translation un étrier (22, 22') comprenant au moins une broche rotative associée (24, 24'), à leur extrémité saillant du boîtier de tambour (2).

4. Tambour de construction de pneumatique selon la revendication 3, **caractérisé en ce que** les broches (24, 24') sont formées sur un arbre commun à pas de filetage opposé et à entraînement en rotation commun (25).

5. Tambour de construction de pneumatique selon l'une des revendications 1 à 4, **caractérisé en ce que** la tige de traction et la tige de poussée (20, 21), conçues sous forme de broche, peuvent être accouplées l'une à l'autre par le biais d'un accouplement à transmission de couple commutable (23) ou d'un entraînement par courroie et comportent un entraînement en rotation commun (232).
